## Europäisches Patentamt

## European Patent Office

## Office européen des brevets

(11) Veröffentlichungsnummer: **0 077 489**
**B1**

# (12) EUROPÄISCHE PATENTSCHRIFT

(45) Veröffentlichungstag der Patentschrift:
05.02.86

(51) Int. Cl.⁴: **B 23 P 19/00**

(21) Anmeldenummer: 82109179.0

(22) Anmeldetag: 05.10.82

(54) Vorrichtung zum Zusammensetzen zweier ineinander-schiebbarer Teile, von denen eines wenigstens einen radial gerichteten Vorsprung aufweist.

(30) Priorität: 17.10.81 DE 3141332

(43) Veröffentlichungstag der Anmeldung:
27.04.83 Patentblatt 83/17

(45) Bekanntmachung des Hinweises auf die Patenterteilung:
05.02.86 Patentblatt 86/6

(84) Benannte Vertragsstaaten:
DE FR GB IT SE

(56) Entgegenhaltungen:
US - A - 3 952 393
US - A - 3 991 459
US - A - 4 033 022
US - A - 4 271 576

SOVIET INVENTIONS ILLUSTRATED, Sektion P, Q;
Woche C08, 2. April 1980 DERWENT PUBLICATIONS
LTD., London Seite P 56

(73) Patentinhaber: BAYERISCHE MOTOREN WERKE
Aktiengesellschaft, Postfach 40 02 40 Petuelring 130,
D-8000 München 40 (DE)

(72) Erfinder: Cettl, Jindrich, Dipl.-Ing., Mühlweg 4,
D-8891 Hilgertshausen (DE)

(74) Vertreter: Dexheimer, Rolf, Bayerische Motoren Werke
Aktiengesellschaft Postfach 40 02 40 Petuelring 130 -
AJ-31, D-8000 München 40 (DE)

**Beschreibung**

Die Erfindung betrifft eine Vorrichtung gemäß dem Oberbegriff des Anspruchs 1.

Beim Zusammenfügen von Kraftfahrzeugmotor und Fahrzeuggetriebe wird üblicherweise zuerst der mit der Reibungskupplung versehene Kraftfahrzeugmotor auf einer Führungs: bahn längsverschiebbar angeordnet und daraufhin das Fahrzeuggetriebe manuell mittels einer Hubvorrichtung derart an der Kupplungsreibscheibe der Reibungskupplung angeordnet, daß die eine Außenverzahnung aufweisende Getriebeantriebswelle stirnseitig an der zugeordneten Innenverzahnung anliegt. Schließlich wird der vom Fahrzeuggetriebe nach hinten hinausragende Antriebsflansch solange manuell gedreht, bis die Außenverzahnung der mit diesem in getrieblicher Verbindung stehenden Getriebeantriebswelle in die Innenverzahnung der Kupplungsreibscheibe geschoben werden kann, also bis 'Zahn auf Lücke' steht. Dieses Montageverfahren ist nicht nur mühevoll und zeitaufwendig, sondern es kann auch sehr leicht an einem oder beiden Montageteilen die Verzahnung oder auch das Führungslager am Kraftfahrzeugmotor beschädigt, sowie die Getriebeantriebswelle verbogen werden, da hierbei die Rotationsachsen der Montageteile nicht bzw. nur mit unvertretbar hohem Zeitaufwand exakt zueinander fluchtend angeordnet werden können.

Aufgabe der Erfindung ist es daher, eine Vorrichtung zu schaffen, durch die zwei in der eingangs genannten Art ausgebildete Teile in rationeller Weise weitgehend automatisch zusammengefügt werden können.

Zur Lösung der Aufgabe sind die im Anspruch 1 dargelegten Gestaltungsmerkmale vorgesehen.

Eine Ausgestaltung der Erfindung besteht darin, daß eines der Teile die an ihrem Endabschnitt mit einer Außenverzahnung versehene und in ein Fahrzeuggetriebe eingebaute Getriebeantriebswelle ist, während es sich beim anderen Teil um die Kupplungsreibscheibe einer an einem Kraftfahrzeugmotor vorgesehenen Reibungskupplung handelt, wobei die Kupplungsreibscheibe eine die Außenverzahnung der Getriebeantriebswelle aufnehmende Innenverzahnung aufweist.

Durch die erfindungsgemäße Vorrichtung können zwei, im Oberbegriff des Anspruchs 1 erläuterte Montageteile weitgehend vollautomatisch zusammengefügt werden, wobei diese vorteilhafterweise nicht beschädigt und auch Arbeitskräfte eingespart werden können. Ferner trägt die erfindungsgemäße Vorrichtung bei ihrer Verwendung zum Zusammensetzen vorgenannter Montageteile auch zur Humanisierung des gesamten Arbeitsablaufes bei.

Verschiedene Ausgestaltungen der Erfindung sind in weiteren Unteransprüchen gekennzeichnet.

Ein Ausführungsbeispiel der Erfindung ist in der Zeichnung dargestellt und wird nachstehend näher erläutert. Es zeigt:

Fig. 1 eine Gesamtansicht der Vorrichtung in Vorderansicht, wobei sich die zu fügenden Montageteile in ihrer Endlage befinden;

Fig. 1a eine Teilansicht der in Fig. 1 dargestellten Vorrichtung, wobei die Montageteile unmittelbar vor dem Zusammenschieben dargestellt sind;

Fig. 2 einen Schnitt längs der Linie II - II in Fig. 1;

Fig. 3 eine Draufsicht zur Fig. 1;

Fig. 4 einen Teilbereich einer Kupplungsreibscheibe und den Endabschnitt einer Getriebeantriebswelle, die mittels der Vorrichtung zusammengefügt werden;

Fig. 5 eine vergrößerte Teilansicht des in Fig. 1 gezeigten Fahrzeuggetriebes mit U-förmigem Aufnahmebügel;

Fig. 6 eine Seitenansicht zu Fig. 5;

Fig. 7 eine vergrößerte Ansicht der in Fig. 1 gezeigten Schraubenspindel mit den an ihren Endabschnitten angeordneten Maschinenteilen und den teilweise dargestellten Haltebock;

Fig. 8 eine Draufsicht zu Fig. 7, wobei die an der Schraubenspindel angeordneten Maschinenteile teilweise in Längsschnitt dargestellt sind;

Fig. 9 eine Einzelansicht der in Fig. 7 gezeigten Kupplungsscheibe in kleinerem Maßstab;

Fig. 10 eine Ansicht der Kupplungsscheibe in Pfeilrichtung A von Fig. 9.

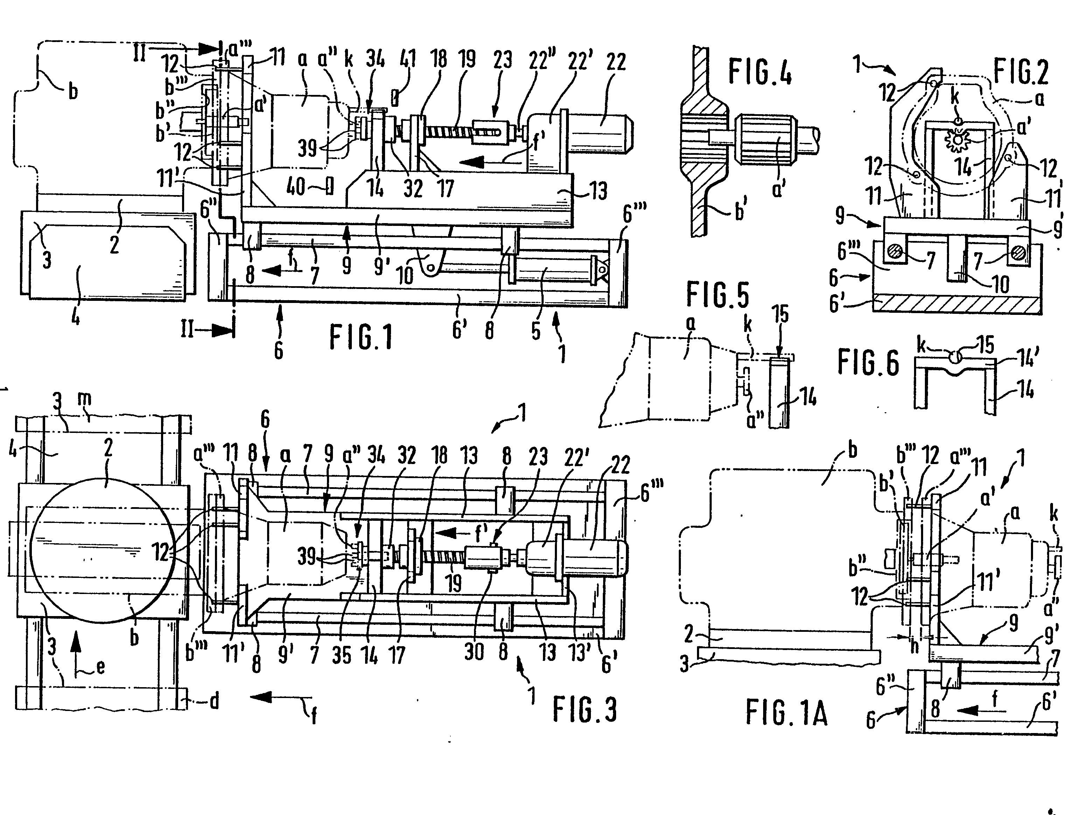

Durch die in den Figuren 1 bis 3 dargestellte Vorrichtung wird die mit einer längs verlaufenden Außenverzahnung - welche beispielsweise als Kerbverzahnung oder Keilwellenprofil ausgebildet ist - versehene Antriebswelle a' eines Fahrzeuggetriebes a, in die entsprechend ausgebildete Innenverzahnung der Kupplungsreibscheibe b' einer an einem Kraftfahrzeugmotor b angebrachten Reibungskupplung b' eingeführt. Dieser ruht unter Zwischenlage einer Platte 2 auf einem Schlitten 3, der längs einer senkrecht zur Rotationsachse - jedoch in deren Ebene - von Kupplungsreibscheibe b' und Getriebeantriebswelle a' verlaufenden Führungsbahn 4 verschiebbar ist. Durch die längsverschiebbare Anordnung des Kraftfahrzeugmotors b kann dieser mit dem Fahrzeuggetriebe a mittels der im folgenden erläuterten Vorrichtung 1 weitgehend automatisch, taktweise und damit rationell zusammengesetzt werden.

Die Vorrichtung 1 weist ein Aufnahmegestell 6 mit rechteckförmiger Grundplatte 6' auf, an der eine Vorderwand 6' und eine Rückwand 6'' vorgesehen ist, während sich die Breitseiten der Grundplatte 6' parallel zur Rotationsachse von Getriebeantriebswelle a' und Kupplungsreibscheibe b' bzw. zur Längsmittelachse anderer Fügeteile erstrecken. An seiner Oberseite ist das Aufnahmegestell 6 mit zwei in parallelem Abstand voneinander angeordneten Führungsholmen 7 versehen, auf denen über jeweils zwei, im Abstand voneinander liegende Führungslager 8 ein Vorschubschlitten 9 längsverschiebbar ist. Dieser wird durch einen als Pneumatikzylinder (oder auch als Hydraulikzylinder) ausgebildeten Stellmotor 5 längsbewegt, der einerseits an der Rückwand 6'' des Aufnahmegestellt 6, und andererseits an einem von der rechteckförmigen Tragplatte 9' des Vorschubschlittens 9 nach unten abstehenden Schubteil 10 angelenkt ist.

2

Nach einem nicht dargestellten Ausführungsbeispiel kann auch ein Vorschubschlitten vorgesehen werde,der um eine lotrecht zur Längsmittelachse (bzw. Rotationsachse von Getriebeantriebswelle a' und Kupplungsreibscheibe b') der zu fügenden Teile verlaufenden Schwenkachse schwenkbar und entsprechend dem Verlauf der Längsmittelachse verlagerbar ist. Ein derart gestalteter Vorschubschlitten ist besonders dann von Vorteil, wenn das Fahrzeuggetriebe a; oder dergleichen Fügeteil, durch einen Handhabungsautomaten in die Vorrichtung 1 eingesetzt und dieser entnommen werden soll.

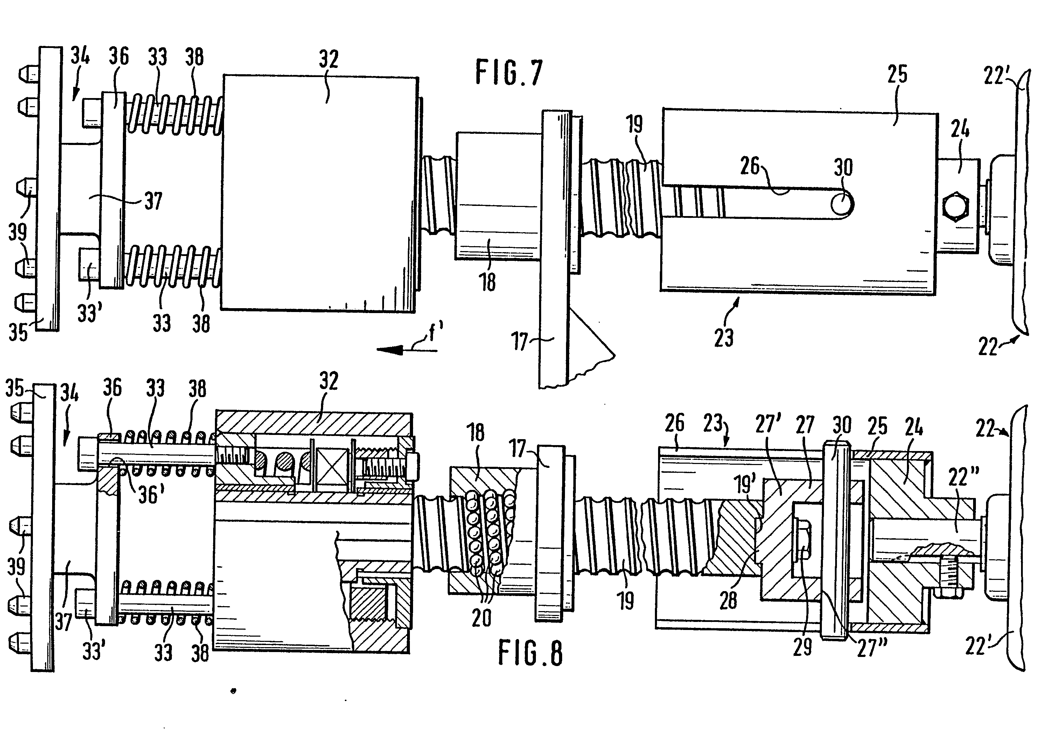

Am vorderen, der Führungsbahn 4 zugewandten Randbereich der Tragplatte 9' des Vorschubschlittens 9 ist eine aus zwei Aufnahmeplatten 11 und 11' bestehende Halteeinrichtung angebracht, wobei die mit ihrer Ebene lotrecht zur Ebene der Tragplatte 9' verlaufenden Aufnahmeplatten 11 und 11' von dieser nach oben abstehen. Die Aufnahmeplatte 11 und 11' ist mit zwei bzw. einem Aufnahmebolzen 12 versehen, die jeweils einer Durchgangsbohrung am Flansch a'' des Fahrzeuggetriebes a und am Flansch b'' des Kraftfahrzeugmotors b zugeordnet sind und einen solchen Durchmesser aufweisen, daß sie in die Durchgangsbohrungen paßgenau eingeführt werden können. Da die freien Endabschnitte der Aufnahmebolzen 12 kegelförmig ausgebildet sind, sind diese problemlos und selbstzentrierend in die Durchgangsbohrungen der Flansche a'', b'' einführbar. Die über die Aufnahmeplatten 11, 11' hinausragende Längserstreckung der Aufnahmebolzen 12 entspricht etwa dem Maß der Dicke der Flansche a'' und b'' plus einem Abstandsmaß h (Fig. 1a). In eine derart gestaltete Halteeinrichtung ist das Fahrzeuggetriebe a rasch und problemlos einführbar und wird dabei lagegenau zur entsprechenden Lage des gegenüberliegenden Flansches b'' des Kraftfahrzeugmotors b justiert, da die Durchgangsbohrungen der'Flansche a'' und b'' das gleiche Lochbild haben, also miteinander fluchten. An seinen Breitseiten ist der Vorschubschlitten 9 mit sich einander gegenüberliegenden Tragwänden 13 versehen, an deren den Aufnahmeplatten und 11' zugewandten Endbereich ein U-förmiger Auflagebügel 14 angebracht ist, dessen die beiden Tragwände 13 überspannender mittlere Steg 14' eine konkave, parallel zur Längserstreckung der Aufnahmebolzen 12 verlaufende Rille 15 hat. Da in dieser die vom Fahrzeuggetriebe a nach hinten abstehende Schaltstange k aufliegt (Fig. 1, 5 und 6), wird dieses an zwei, einander in relativ großem Abstand gegenüberliegenden punkten, nämlich einerseits an seinem Flansch a'' von den Aufnahmebolzen 12, und andererseits vom Auflagebügel 14 bei auf diesem aufliegender Schaltstange k aufgenommen. Benachbart des U-förmigen Aufnahmebügels 14 ist auf der Tragplatte 9' des Vorschubschlittens 9 zwischen den Tragwänden 13 ein Haltebock 17 angebracht, in dessen oberen Endbereich eine als Bundbuchse gestaltete Führungsmutter 18 drehfest eingesetzt ist, welche als eine Kugelumlaufmutter ausgebildet ist. In die Führungsmutter 18 ist eine Schraubenspindel 19 eingeschraubt, wobei sowohl deren Gewindegänge als auch die Gewindegänge der Führungsmutter 18 im Querschnitt des Gewindeprofils konkav halbrundförmig, dem Radius der in die Führungsmutter 18 eingesetzten Kugeln 20 entsprechend, ausgebildet sind (Fig. 8). Da die Schraubenspindel 19 bei Drehung um ihre Rotationsachse mit der Führungsmutter 18 über die zwischenliegenden Kugeln 20 zusammenwirkt, entsteht zwischen den beiden Teilen eine rollende Reibung, durch die die Schraubenspindel 19 bei Drehung um ihre Rotationsachse eine geringe Selbsthemmung und damit eine große Leichtgängigkeit hat. Die Schraubenspindel 19 ist über den Haltebock 17 derart auf dem Vorschubschlitten 9 angeordnet, daß ihre Rotationsachse mit der Rotationsachse von Antriebflansch a', Getriebeantriebswelle a' und Kupplungsreibscheibe b' bzw. mit der Längsmittelachse andersartig ausgebildeter Fügeteile fluchtet.

An einer die Tragwände 13 verbindenden Rückwand 13', sowie an der Tragplatte 9' ist ein mit einem Untersetzungsgetriebe 22' ausgerüsteter Antriebsmotor 22 angebracht, an dessen Antriebswelle 22' die Antriebskupplung 23 befestigt ist. Wie in der vergrößerten Darstellung (Fig. 8) der Antriebskupplung 23 ersichtlich, hat diese eine scheibenförmige, mittels einer Paßfeder und Stellschraube mit der Antriebswelle 22' verbundene Befestigungsnabe 24, die mit einer hohlzylindrischen, die Schraubenspindel 19 mit Radialspiel umgebenden Hülse 25 an ihrem rückwärtigen Endabschnitt verschweißt ist; diese ist mit zwei diametral gegenüberliegenden, sich bis nahe zur Befestigungsnabe 24 erstreckenden Längsschlitzen 26 versehen. Die Schraubenspindel 19 trägt an ihrer der Antriebskupplung 23 zugewandten Stirnseite ein hohlzylindrisches Aufnahmeteil 27, das mit einem Boden 27' versehen ist. Von diesem steht ein quer zur Rotationsachse des Aufnahmeteils 27 verlaufender, nasenartiger Vorsprung 28 ab, der in eine entsprechend ausgebildete, an der Stirnseite der Schraubenspindel 19 vorgesehenen Nut 19' eingreift, wobei das Aufnahmeteil 27 und die Schraubenspindel 19 durch eine Schraube 29 miteinander verschraubt sind. Der Schaft des Aufnahmeteils 27 ist von einer senkrecht zu dessen Rotationsachse verlaufenden Aufnahmebohrung 27' durchsetzt, in die ein in die beiden Längsschlitze 26 der hohlzylindrischen Hülse 25 eingreifender Querstift 30 starr eingesetzt ist, der etwas länger als deren Außendurchmesser ist. Die in erläuterter Weise gestaltete, sich aus den Teilen 24, 25, 27 und 30 zusammensetzende Antriebskupplung 23 ist einfach herstellbar und montierbar, sowie kaum störanfällig im Betriebseinsatz.

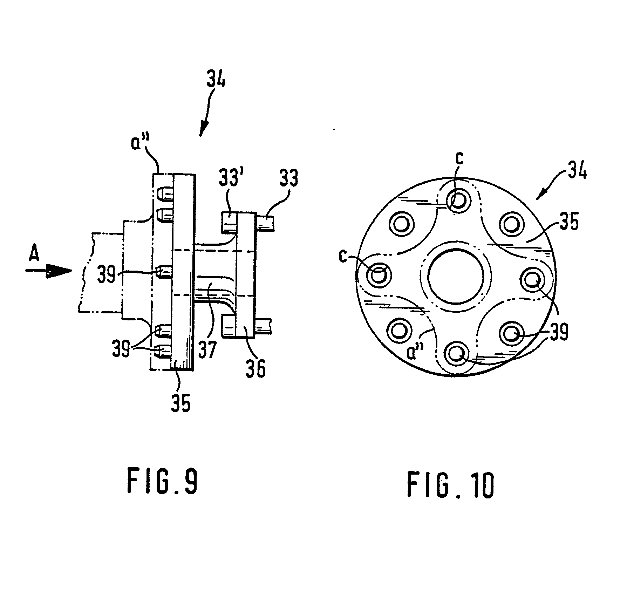

An der Schraubenspindel 19 ist an dem der Antriebskupplung 23 gegenüberliegenden Endabschnitt eine Rutschkupplung 32 drehfest befestigt, welche eine mechanisch oder elektrisch ausgebildete Einstelleinrichtung für ein jeweils zu übertragendes Drehmoment im Betriebseinsatz der Vorrichtung 1 aufweist. Durch die Einstelleinrichtung ist an der Rutschkupplung 32 ein den jeweils zu fügenden Teilen (zum Beispiel Getriebsantriebswelle a' und Kupplungsreibscheibe b') angepaßtes Drehmoment einstellbar. Die Rutschkupplung 32 ist auf ihrer der Schraubenspindel 19 gegenüberliegenden Stirnseite mit vier starr eingesetzten, in gleich großen Winkelabständen voneinander angeordneten und auf einem gemeinsamen Lochkreis liegenden Distanzbolzen 33 versehen, die an ihrem freien Ende eine Kupplungsscheibe 34 axial verlagerbar tragen. Diese besteht aus einer außenliegenden, als Eingriffselement dienenden Stiftscheibe 35 und einer innenliegenden, in parallelem Abstand zu dieser verlaufenden Tragscheibe 36, welche mit der Stiftscheibe 35 über einen zentrischen Fortsatz 37'verbunden ist. Die in der Tragscheibe 36 angeordneten, die Distanzbolzen 33 aufnehmenden Durchgangsbohrungen 36' haben gegenüber letzteren jeweils ein Radialspiel, wodurch die Kupplungsscheibe 34 axial verlagert werden kann. Am freien Ende der Distanzbolzen 33 ist jeweils eine mit der innenliegenden Stirnseite der Tragscheibe 36 zusammenwirkender Schraubenkopf 33' oder dergleichen vorgesehen, gegen die die Kupplungsscheibe 34 in ihrer Ruhelage von vier, jeweils einen Distanzbolzen 33 umgebenden Druckfedern 38 gedrückt wird, welche sich einerseits an der freien Stirnseite der Rutschkupplung 32 abstützen, und andererseits gegen die Tragscheibe 36 wirken. Da die Kupplungsscheibe 34 bei ihrer axialen Verlagerung über vier, relativ weit voneinander entfernt liegende Distanzbolzen 33 geführt ist, kann ihre Ebene nicht in Bezug zur Stirnseite der Rutschkupplung 32 verkantet werden. Wie Fig. 10 zeigt, ist die Stiftscheibe 35 mit acht, von ihrer außen liegenden Stirnseite abstehenden Mitnahmestiften 39 versehen, die auf einem gemeinsamen, dem Lochkreis der Durchgangsbohrungen c am Antriebsflansch a' entsprechenden Lo-chkreis liegen und in gleich großem Winkelabstand voneinander angeordnet sind; ferner sind die freien Endabschnitte der Mitnahmestifte 39 kegelförmig ausgebildet, während ihr Durchmesser etwas kleiner ist als der Durchmesser der Durchgangsbohrungen c. Zum Drehen des vom Fahrzeuggetriebe a nach hinten abstehenden Antriebsflansches a' um seine Rotationsachse (Fig. 1, 5 und 9) und damit zum Drehen der mit diesem in getrieblicher Verbindung stehenden Getriebeantriebswelle a' um ihre Rotationsachse ist es erforderlich, daß die Stiftscheibe 35 der Kupplungsscheibe 34 drehfest mit dem Antriebsflansch a' zusammenwirkt. Hierfür sind die Mitnahmestifte 39 den Durchgangsbohrungen c am Antriebsflansch a' zugeordnet und greifen beim Betriebseinsatz der Vorrichtung 1 in die Durchgangsbohrungen c ein. Die Mitnahmestifte 39 können jedoch auch an den radial abstehenden Armen des Antriebsflansches a' anliegen. Aufgrund dessen ist die Anzahl der vorgesehenen Mitnahmestifte 39 gleich oder doppelt so groß wie die Anzahl der Durchgangsbohrungen c am Antriebsflansch a'. Wenn jedoch die Anzahl der Mitnahmestifte 39 doppelt so groß wie die am Antriebsflansch a' vorhandene Anzahl von Durchgangsbohrungen c ist, kann die Kupplungsscheibe 34 im Betriebseinsatz der Vorrichtung 1 wesentlich rascher als bei einer der Anzahl der Durchgangsbohrungen c entsprechenden Anzahl von Mitnahmestiften 39 mit dem Antriebsflansch a' in Eingriff gebracht werden.

Am Vorschubschlitten 9 sind zwei, zweckmäßigerweise als berührungslose Kontaktelemente ausgebildete Endkontakte 40 und 41 angebracht, wobei die Vorschubbewegung der Schraubenspindel 19 nach vollständig in die Kupplungsreibscheibe b' eingeschobener Getriebe angetriebswelle a' durch den Endkontakt 40 unterbrochen und die Schraubenspindel 19 daraufhin in ihre Ausgangslage zurückgedreht wird. Nach Anordnung von neuen, mittels der Vorrichtung 1 zusammenzufügenden Teilen auf dem Schlitten 3 und in der Vorrichtung 1 wird die Schraubenspindel 19 in ihrer Ausgangslage durch den Endkontakt 41 umgesteuert und wieder vorwärts bewegt. Um die Endkontakte 40 und 41 unkompliziert auf unterschiedliche Längserstreckungen der Fügeteile (Getriebeantriebswelle a' und Kupplungsreibscheibe b') einstellen zu können, sind sie zweckmäßigerweise längsverschiebbar am Vorschubschlitten 9 angeschraubt. Die Endkontakte 40 und 41 tragen zum weitgehend automatisierten Funktionsablauf der Vorrichtung 1 bei.

Die Wirkungsweise der beschriebenen Vorrichtung 1 ist folgende:

Vor dem Zusammenbau von Fahrzeuggetriebe a und Kraftfahrzeugmotor b wird dieser auf dem Schlitten 3 angeordnet, der sich dabei zweckmäßigerweise in der in Fig. 3 gezeigten Schiebestellung d befindet, welche neben der benachbarten Vorrichtung 1 liegt. Somit besteht ein freier Zugriff zur Stirnseite der Vorrichtung 1, so daß der Flansch a*' des Fahrzeuggetriebes a an der Stirnseite der Aufnahmeplatten 11 und 11' - manuell oder durch einen Handhabungsautomaten - angeordnet werden kann, wobei der Flansch a*' mit seinen Durchgangsbohrungen über die diesen zugeordneten Aufnahmebolzen 12 soweit geschoben wird, bis seine Rückseite an den Aufnahmeplatten 11 und 11' anliegt; dabei liegt die Schaltstange k des Fahrzeuggetriebes a auf dem Auflagebügel 14 auf. Daraufhin wird über eine nicht dargelegte, den Schlitten 3 u. den Vorschubschlitten 9 über Stellmotore steuernde Programmsteuerung der den Kraftfahrzeugmotor b tragende Schlitten 3 in Pfeilrichtung e in die in Fig. 3 gezeichnete, zweckmäßigerweise durch einen Anschlag begrenzte Montagestellung verschoben, in der die am Flansch b'' des Kraftfahrzeuggangsbohrungen am Flansch a'' des Fahrzeuggetriebes a' fluchten. Durch einen Steuerimpuls der erwähnten Programmsteuerung wird sodann der (zuvor zurückgeschobene), das schiebung der Kolbenstange des Stellmotors 5 soweit in pfeilrichtung f längsbewegt, bis die Aufnahmebolzen 12 mit ihren freien, kegelförmig ausgebildeten Endabschnitten in motors b hineinragen ('anspitzen'), so daß das Fahrzeuggetriebe a und der Kraftfahrzeugmotor b in bezug auf ihre Fügeachse exakt zueinander positioniert sind; in dieser, Vorschubschlitten 9 bis zum - im folgenden erläutertenAnliegen des Flansches a*' des Fahrzeuggetriebes a am Flansch b''' des Kraftfahrzeugmotors b. Das sich hierbei zwischen den einander zugewandten Stirnseiten der Flansche a'', b' ergebende, ca. 25 mm betragende Abstandsmaß h (Fig. 1a) ist dabei so bemessen, daß die Stirnseite der Getriebeantriebswelle a' etwa 2 bis 3 mm von der zugekehrten Stirnseite der Kupplungsreibscheibe b' entfernt ist (Fig. 4), wodurch vorhandene Maßtoleranzen an den Montageteilen ausgeglichen werden können; ferner entspricht das Abstandsmaß h etwa dem Längenmaß der die Innenverzahnung aufweisenden Nabe der Kupplungsreibscheibe b'.

Nach Positionierung von Fahrzeuggetriebe a und Kraftfahrzeugmotor b über die Aufnahmebolzen 12 wird vom Endkontakt 41 ein Steuerimpuls an den Antriebsmotor 22 abgegeben, wodurch dessen Untersetzungsgetriebe 22' - unter Zwischenschaltung der Antriebskupplung 23 - die Schraubenspindel 19 mit etwa 16 U/min antreibt. Da diese von dem am Vorschubschlitten 9 befestigten Haltebock 17 gehalten ist, wird sie bei Drehung um ihre Rotationsachse im Uhrzeigersinn über die Führungsmutter 18 schraubend in Pfeilrichtung f' ausgeschoben - wobei der Querstift 30 entlang den Längsschlitzen 26 der Hülse 25 gleitet - wodurch schließlich die Mitnahmestifte 39 der Kupplungsscheibe 34 in die radial gerichteten Arme oder Durchgangsbohrungen c des zugewandten Antriebsflansches a' des Fahrzeuggetriebes a eingreifen und letztlich die Kupplungsscheibe 34 am Antriebsflansch a' anliegt. Da die Schraubenspindel 19 dabei weiterhin angetrieben und damit ausgeschoben wird, wird einerseits die mit dem Antriebsflansch a' in getrieblicher Verbindung stehende Getriebeantriebswelle a' des Fahrzeuggetriebe. a angetrieben und dieses andererseits in Pfeilrichtung f' längs den Aufnahmebolzen 12 verschoben, wobei gleichzeitig die zwischen Rutschkupplung 32 und Kupplungsscheibe 34 vorgesehenen Druckfedern 38 etwas zusammengedrückt werden. Da meistens bei der daraufhin erfolgenden Anlage der Stirnseite der Getriebeantriebswelle a' an der zugewandten Stirnseite der Kupplungsreibscheibe b' die Getriebeantriebswelle a' eine solche Drehlage hat, daß die Zähne bzw. Keile ihres Keilwellenprofils oder dergleichen nicht in die zugeordneten Zahnlücken der Innenverzahnung der Kupplungsreibscheibe b' eingreifen, wird die Stirnseite der Zähne des Keilwellenprofils - infolge weiterer Längsverschiebung des Fahrzeuggetriebes b durch Ausschiebung der Schraubenspindel 19 - kurzzeitig gegen die Stirnseite der Innenverzahnung der Kupplungsreibscheibe b' gepreßt. Hierdurch werden die Druckfedern 38 solange weiter vorgespannt, bis die Zähne des Keilwellenprofils der sich dabei weiterhin um ihre Rotationsachse drehenden Getriebeantriebswelle a' in kongruenter Stellung zu den zugeordneten Zahnlücken der Innenverzahnung der Kupplungsreibscheibe b' stehen. In dieser Drehlage der Getriebeantriebswelle a' können sich die in geschilderter Weise vorgespannten Druckfedern 38 schlagartig entspannen und verschieben dadurch das Fahrzeuggetriebe a längs den Aufnahmebolzen 12, wodurch das Verzahnungsprofil der Getriebeantriebswelle a' in die Innenverzahnung der Kupplungsreibscheibe b' geschoben wird und damit die beiden Montageteile miteinander in formschlüssigem Eingriff stehen. Da bei diesem Montagevorgang die Reibungskupplung b"''eingekuppelt', also deren Kupplungsreibscheibe b' gegen Rotativnsdrehen gesichert ist, spricht nach dem formschlüssigen Ineinandergreifen von Getriebeantriebswelle a' und Kupplungsreibscheibe b' die auf ein entsprechendes Drehmoment eingestellte Rutschkupplung 32 an, wodurch die bis dahin bestehende Rotationsdrehung der axial verlagerbaren Kupplungsscheibe 34 unterbrochen wird. Durch die weiterhin rotierende und damit sich ausschiebende Schraubenspinsel 19 - wobei sich der mit dieser verbundene Teil der Rutschkupplung 32 dreht, während deren mit der Kupplungsscheibe 34 verbundene Teil stillstehtwird nunmehr das Fahrzeuggetriebe a soweit längsverschoben, bis sein Flansch a'' am Flansch b'' des Kraftfahrzeugmotors b anliegt (Fig. 1 und 3); dabei ist auch die Getriebeantriebswelle a' vollständig in die Innenverzahnung der Kupplungsreibscheibe b' geschoben.

In dieser Schiebestellung des Fahrzeuggetriebes a wird das Rotieren der Schraubenspindel 19 und damit ihre Vorschubbewegung durch den Endkontakt 40 unterbrochen und durch Umsteuerung des Antriebsmotors 22 die Schraubenspindel 19 entgegen dem Uhrzeigersinn und damit entgegen der Pfeilrichtung f' in ihre Ausgangslage zurückgedreht. Gleichzeitig wird auch der Vorschubschlitten 9 über die entsprechend gesteuerte Programmsteuerung entgegen der Pfeilrichtung f in seine Ausgangslage zurückgeschoben. Nunmehr können in die Vorrichtung 1 und, nach Verschieben des Schlittens 3 auf diesem, neue zu fügende Teile eingesetzt werden.

Der in geschilderter Weise durch einen weitgehend automatisierten Montagevorgang mit dem Fahrzeuggetriebe a versehene Kraftfahrzeugmotor b wird daraufhin über den Schlitten 3 in Pfeilrichtung e längs der Führungsbahn 4 in dessen Schiebestellung m weiterbewegt, in der der Flansch a"' des Fahrzeuggetriebes a mit dem Flansch b"' des Kraftfahrzeugmotors b durch in deren Durchgangsbohrungen eingesetzte Schrauben verschraubt wird.

Falls die Getriebeantriebswelle a' bei Drehung um ihre Rotatonsachse und gegen die Kupplungsreibscheibe b' gerichteter Längsverschiebung zufälligerweise eine solche Drehlage hat, daß die Zähne ihres Keilwellenprofils kongruent zu den zugeordneten Zahnlücken der Innenverzahnung der Kupplungsreibscheibe b' stehen, wird durch Entspannung der Druckfedern 38 die Getriebeantriebswelle a' sogleich in die Innenverzahnung der Kupplungsreibscheibe geschoben, so daß die Rutschkupplungsanspricht. Der weitere Montagevorgang des Fahrzeuggetriebes a erfolgt in erwähnter Weise.

Bei entsprechend bemessener Federkraft der Druckfedern 38 können mittels der Vorrichtung 1 auch mit einem Ruhesitz versehene Montageteile ineinandergeschoben werden.

Ferner können mit der Vorrichtung 1 selbstverständlich auch Montageteile mit schräg verlaufender Verzahnung zusammengefügt werden. Bei dieser Verzahnungsart wird beim Ineinanderschieben der Montageteile der mit der axial verlagerbaren Kupplungsscheibe 34 in Verbindung stehende Teil der Rutschkupplung 32 um seine Rotationsachse gedreht.

Bei entsprechender Ausbildung der Halteeinrichtungen sind mittels der Vorrichtung 1 selbstverständlich sämtliche, im Oberbegriff des Anspruchs 1 erläuterte Montageteile zusammenfügbar.

## Patentansprüche:

1. Vorrichtung (1) zum Zusammensetzen zweier ineinanderschiebbarer Teile (a', b') denen eines wenigstens einen radial gerichteten Vorsprung aufweist, welcher beim Ineinanderschieben der Teile in eine entsprechend ausgebildete Ausnehmung des anderen Teils eingreift, wobei das erste Teil (b') unverschiebbar angeordnet ist und das zweite Teil(a') mit dem ersten Teil fluchtend ausgerichtet und schließlich das zweite Teil (a') bei Drehung um seine Längsachse und gleichzeitigsr Axialverschiebung über oder in das erste Teil (a') geschoben wird, gekennzeichnet durch
- eine das zweite Teil( a') aufnehmende und dieses mit dem ersten Teil(b') in bezug auf die Fügeachse

0 077 489

positionierende Halteeinrichtung (9),
- eine von einer starren Aufnahne (17) gehaltene, antreibbare Schraubenspindel (19), welche mit einer Rutschkupplung (32) versehen ist, die mit den zweiten Teil (aᴵ) über ein federbelastetes Druckstück (34) zusammenwirkt.

2. Vorrichtung nach Anspruch 1, dadurch gekennzeichnet, daß das zweite Teil die an ihrem Endabschnitt mit einer Außenverzahnung versehene und in ein Fahrzsuggetriebe (a) eingehaute Getriebeantriebswelle (a') ist, während es sich beim ersten Teil um die Kupplungsreibschsibe (b') einer an einem Kraftfahrzeugmotor (b) vorgesehenen Reibungskupplung (b') handelt, wobsi die Kupplungsrsibscheibe eine die Außenvsrzahnung dsr Getriebeantriebswelle aufnshmsnde Innenverzahnung aufweist.

3. Vorrichtung nach Anspruch 2, dadurch gekennzeichnet daß der die Reihungskupplung (b') tragende Kraftfahrzeugmotor (b) auf einem Schlitten (3) ruht, welcher längs einer senkrecht zur Rotationsachse von Kupplungsreibscheibe (b') und Getrieheantriehswelle (a') verlaufenden Führunqsbahn (4) verschiebbar ist.

4. Vorrichtung nach Ansoruch 1, gekennzeichnet durch ein Parallel zur Längsmittelachse der Fügeteile verlaufendes Aufnahnegestell (6) mit zwei obenliegenden, in parallelem Abstand voneinander angeordneten Führungsholmen (7), auf denen über jeweils zwei Führungslager (8) ein Vorschubschlitten (9) durch einen einerseits an der Rückwand (6') des Aufnahmegestells (6) und andererseits an einem vom Vorschubschlitten nach unten abstehenden Schubteil (10) angelenkten Stellmotor (5) längsverschiebbar ist.

5. Vorrichtung nach Anspruch 1, gekennzeichnet durch einen Vorschubschlitten, der um eine lotrecht zur Längsmittelachse der zu fügenden Teile verlaufende Schwenkachse schwenkbar und entsprechend der Längsmittelachse verlagerbar ist.

6. Vorrichtung nach Anspruch 2 oder 4, dadurch gekennzeichnet, daß die aus zwei Aufnahmeplatten (11, 11,) bestehende Halteeinrichtung am vorderen, stirnseitigen Rand des eine rechteckige Außenform aufweisenden Vorschubschlittens (9) lotrecht zu dessen Ebene verlaufend angeordnet und mit drei nach vorne abstehenden, jeweils einer Durchgangsbohrung am Getriebeflansch (a' '), sowie am Motorflansch (b' ') zugeordneten Aufnahmebolzen (12) versehen ist, deren freie Endabschnitte jeweils kegelförmig ausgebildet sind.

7. Vorrichtung nach Anspruch 4 oder 6, dadurch gekennzeichnet, daß an den Breitseiten des Vorschubschlittens (9) sich einander gegenüberliegende Tragwände (13) befinden, an deren vorderem Endbereich ein mit seinem mittleren Steg die beiden Tragwände überspannender, U-förmiger Auflagebügel (14) vorgesehen ist, dessen mittlerer Steg (14') eine längsverlaufende, konkave Rille (25) zur Auflage einer vom Fahrzeuggetriebe (a) nach hinten abstehemden Schaltstange (k) aufweist.

8. Vorrichtung nach Anspruch 7, dadurch gekennzeichnet, daß am rückwärtigen Endbereich des Vorschubschlittens (9) an einer die Tragwände (13) verbindenden Rückwand (13') ein mit einem Untersetzungsgetriebe (22') versehener Antriebsmotor (22) angeordnet ist, dessen Antriebswelle (22') die Antriebskupplung (23) trägt, welche aus einer scheibenförmigen, mit der Antriebswelle verbundenen Befestigungsnabe (24) und einer die Schraubenspindel (19) mit Radialspiel umgebenden, hohlzylindrischen Hülse (25) besteht, die zwei diametral gegenüberliegende, sich bis nahe zu der am rückwärtigen Endabschnitt der Hülse angebrachten Befestigungsnabe erstreckende Längsschlitze (26) aufweist, in die ein am Endabschnitt der Schraubenspindel (19) vorgesehener Querstift (30) eingreift.

9. Vorrichtung nach Anspruch 8, dadurch gekennzeichnet, daß an der dem Antriebsmotor (22) zugewandten Stirnseite der Schraubenspindel (19) ein hohlzylindrisches, schraubenspindelseitig mit einen Boden (27') versehenes Aufnahmeteil (27) festgeschraubt ist, von dessen Boden ein quer zur Rotationsachse des Aufnahmeteils verlaufender, nasenartiger Vorspring (28) absteht, der in eine entsprechend ausgebildete, an der Stirnseite der Schraubenspindel vorgesehenen Hut (19') eingreift, wobei der Schaft des Aufnahmeteils von einer quer zu dessen Rotationsachse verlaufenden Aufnahmebohrung (27') durchsetzt ist, in die der Querstift (30) starr eingesetzt ist.

10. Vorrichtung nach Anspruch 1, dadurch gekennzeichnet, daß der Vorschubschlitten (9) zwischen dem U-förmigen Auflagebügel (14) und dem Antriebsmotor (22) einen Haltebock (17) zur Aufnahme der als eine Bundbuchse gestalteten Führungsmutter (18) trägt, welche als eine Kugelumlaufmutter ausgebildet ist.

11. Vorrichtung nach Anspruch 1, dadurch gekennzeichnet, daß die Rutschkupplung (32) eine Einstelleinrichtung für ein jeweils zu übertragendes Drehmoment aufweist.

12. Vorrichtung nach Anspruch 1 oder 2, dadurch gekennzeichnet, daß die axial verlagerbare Kupplungsscheibe (34) eine außenliegende, als Eingriffselement dienende Stiftscheibe (35) und eine innenliegende, in parallelem Abstand zu dieser verlaufende, sowie mit der Stiftscheibe über einen zentrischen Fortsatz (37) verbundene Tragscheibe (36) aufweist, die mehrere, in gleich großem Winkelabstand angeordnete Durchgangsbohrungen (36') hat, welche jeweils mit Radialspiel von in die Rutschkupplung (32) eingesetzten Distanzbolzen (33) durchsetzt sind, die ihrerseits an ihrem freien Endabschnitt einen mit der innenliegenden Stirnseite der Tragscheibe zusammenwirkenden Schraubenkopf (33') Querstift oder dergleichen aufweisen, wobei die Distanzbolzen jeweils von einer einerseits an der freien Stirnseite der Rutschkupplung, und andererseits an der Tragscheibe anliegenden Druckfeder (38) umgeben sind.

13. Vorrichtung nach Anspruch 12, dadurch gekennzeichnet, daß die Stiftscheibe (35) der axial verlagerbaren Kupplungsscheibe (34) mindestens drei von ihrer außenliegenden Stirnseite abstehende, sowie auf einem gemeinsamen Lochkreis liegende und in gleich großem Winkelabstand voneinander angeordnete Mitnahmestifte (39) aufweist, die den Durchgangsbohrungen (c) an dem nach hinten abstehenden Antriebsflansch (a') des Fahrzeuggebriebes (a) zugeordnet sind, wobei die Anzahl der Mitnahmestifte gleich oder doppelt so groß wie die Anzahl der Durchgangsbohrungen am Antriebsflansch ist.

6

14. Vorrichtung nach Anspruch 1, dadurch gekennzeichnet, daß nach vollständig in die Kupplungsreibscheibe (b') eingeschobener Getriebeantriebswelle (a') die Vorschubbewegung der Schraubenspindel (19) durch einen ortsfest angeordneten Endkontakt (40) unterbrochen und diese anschließend in ihre Ausgangslage zurückgedreht wird, in der sie daraufhin - nach Anordnung von neuen, mittels der Vorrichtung (1) zu fügenden Teilen - durch einen ortsfest angeordneten Endkontakt (41) umgesteuert und wieder vorwärtsbewegt wird.

15. Vorrichtung nach Anspruch 14, dadurch gekennzeichnet, daß die Endkontakte (40, 41) als berührungslose Kontaktelemente ausgebildet sind.

**Claims**

1. Apparatus (1) for assembling two parts (a' b') which are slidable one within the other with one part comprising at least one radially-directed projection which engages, on sliding of the parts one within the other, in a correspondingly-formed recess of the other part, wherein the first part (b') is non-displaceably arranged and the second part (a'), on rotation about its longitudinal axis and simultaneous axial displacement, is pushed over or into the first part (b'), characterised by
- a retaining device (9) which receives the second part (a') and positions it with the first part (b') in relation to the joint axis,
- a drivable screw spindle (19) held by a rigid mounting(17) and provided with a slipping clutch (32) which cooperates with the second part (a') through a spring-loaded thrust piece (34).

2. Apparatus according to Claim 1, characterised in that the second part is a gear drive-input shaft (1') provided with external teeth on its end section and installed in a vehicle gearing (a), while the first part is a clutch friction disc (b') of a friction clutch (b') provided on a motor vehicle engine (b), the clutch friction disc having internal teeth which engage the external teeth on the gear drive-input shaft.

3. Apparatus according to Claim 2, characterised in that the motor vehicle engine (b) carrying the friction clutch (b') rests on a carriage (3) which is displaceable along a guide path (4) extending perpendicularly of the axis of rotation of the clutch friction disc (b') and the gear drive-input shaft (a').

4. Apparatus according to Claim 1, characterised by a mounting frame (6) extending parallel to the longitudinal central axis of the joined parts, with two upwardly-arranged guide spars (7) positioned with parallel spacing from one another on which, through two guide bearings (8) in each case, a feed motion carriage (9) is longitudinally displaceable by a servo-motor (5) articulated on one side to the rear wall (6' ') of the mounting frame (6) and on the other side to a thrust part (10) protruding downwards from the feed motion carriage.

5. Apparatus according to Claim 1, characterised by a feed motion carriage which is pivotable about a pivot axis extending perpendicularly of the longitudinal central axis of the parts to be joined and which is shiftable in the direction of the longitudinal central axis.

6. Apparatus according to Claim 2 or 4, characterised in that the retaining device which comprises two mounting plates (11, 11,) is arranged on the forward terminal edge of the feed motion carriage (9) of rectangular external form, extending perpendicularly of the plane thereof, and is provided with three forwardly-protruding mounting bolts (12) each allocated to a through-bore in the gear flange (a'') and in the engine flange (b''), the free end sections of which bolts are each made in conical form.

7. Apparatus according to Claim 4 or 6, characterised in that mutually-opposite carrier walls (13) are situated on the wide sides of the feed motion carriage (9), at the forward end region of which walls there is provided a U-shaped support arch (14) spanning over the two carrier walls with its middle cross-piece (14') being provided with a longitudinally-extending concave groove (25) for the support of a shift rod (k) which protrudes to the rear from the vehicle gear (a).

8. Apparatus according to Claim 7, characterised in that, in the rear end region of the feed motion carriage (9) on a rear wall (13') connecting the carrier walls (13), there is arranged a drive motor (22) provided with a reduction gearing (22') the drive shaft (22') of which motor carries the drive coupling (23) which comprises a securing hub (24) of disc-form connected with the drive shaft and a hollow-cylindrical sleeve (25) surrounding the screw spindle (19) with radial play, which sleeve comprises two diametrically-opposite longitudinal slots (26) extending to close to the securing hub fitted on the rear end section of the sleeve, in which slots there engages a transverse pin (30) provided on the end section of the screw spindle (19).

9. Apparatus according to Claim 8, characterised in that, on the end face of the screw spindle (19) facing the drive motor (22), there is screwed fast a hollow-cylindrical reception part (27) provided with a base (27') on the screw spindle side, from the base of which there protrudes a nose-type projection (28) extending transversely of the axis of rotation of the reception part, which projection engages in a correspondingly-formed groove (19') provided on the end of the screw spindle, while the shank of the reception part is penetrated by a reception bore (27') extending transversely of its axis of rotation, into which bore the transverse pin (30) is rigidly inserted.

10. Apparatus according to Claim 1, characterised in that the feed motion carriage (8) carries between the U-shaped support arch (14) and the drive motor (22) a retaining bracket (17) for the reception of the guide nut (18) formed as a flange bush and as a ball-circulation nut.

11. Apparatus according to Claim 1, characterised in that the slipping clutch (32) comprises an adjusting device for torque to be transmitted in each case.

12. Apparatus according to Claim 1 or 2, characterised in that the axially-displaceable clutch disc (34) comprises an externally-situated pin disc (35) serving as an engagement element and an internally-situated carrier disc (36), extending with parallel spacing therefrom and connected with the pin disc through a central extension (37), which carrier disc has a plurality of passage bores (36') arranged at equally great angular intervals, which bores are each penetrated with radial play by distance bolts (33) inserted with radial play into the slipping clutch (32) which bolts in turn comprise at their free end section a screw-head (33'), transverse pin or the like co-operating with the internally-situated end face of the carrier disc, the distance bolts each being surrounded by a compression spring (38) resting on the free end face of the slipping clutch on the one part and on the carrier disc on the other part.

13. Apparatus according to Claim 12. characterised in that the pin disc (35) of the axially-shiftable clutch disc (34) comprises at least three engaging pins (39) protruding from its external end face, lying on a common hole circle and arranged at equal angular intervals from one another, which pins are allocated to the passage bores (c) of the rearwardly-protruding drive-input flange (a') of the vehicle gearing (a), the number of the engaging pins being equal to or twice as great as the number of the passage bores of the drive-input flange.

14. Apparatus according to Claim 1, characterised in that, after the gear drive-input shaft (a') has been pushed completely into the clutch friction disc (b'), the feed motion of the screw spindle (19) is interrupted by a non-displaceably arranged end contact (40) and then the spindle is turned back into its initial position in which - after the arrangement of new parts to be joined by means of the apparatus (1) - it is then reversed by a non-displaceably arranged end contact (41) and moved forwards again.

15. Apparatus according to Claim 14, characterised in that the end contacts (40, 41) are formed as contactless contactor elements.


## Revendications

1.- Appareil (1) pour l'assemblage de deux parties (a', b') susceptibles de coulisser l'une dans l'autre et dont l'une comporte au moins une saillie dirigée radialement, qui lors du coulissement des pièces l'une dans l'autre vient en prise dans un évidement ménagé de façon correspondante dans l'autre partie, la première partie (b,) étant disposée de façon à ne pouvoir coulisser, tandis que la seconde partie (a') est alignée avec la première partie, et finalement cette seconde partie (a'), en la faisant tourner autour de son axe longitudinal et en la déplaçant simultanément axialement, est poussée sur ou dans la première partie (b'), appareil caractérisé en ce qu'il comporte :
- un dispositif de maintien (9) recevant la seconde partie (a') et la positionnant avec la première partie (b') par rapport à l'axe d'emboîtement,
- une broche filetée (19) susceptible d'être entraînée, maintenue par un support (17) rigide, et qui est munie d'un accouplément à friction (32), lequel coopère avec la seconde partie (a') par l'intermédiaire d'une pièce de pression (34) sollicitée par un ressort.

2.- Appareil selon la revendication 1, caractérisé en ce que la seconde partie est l'arbre d'entraînement (a') de la boîte de vitesses, muni sur sa partie d'extrémité d'une denture externe, et incorporé dans la boîte de vitesses (a) d'un véhicule, tandis que dans le cas de la première partie, il s'agit du disque de friction (b,) d'un accouplément à friction (b') prévu sur un moteur (b) de véhicule automobile, ce disque de friction de l'accouplement comportant une denture interne dans laquelle vient se loger la denture externe de l'arbre d'entraînement de la boîte de vitesses.

3.- Appareil selon la revendication 2, caractérisé en ce que le moteur (b) de véhicule automobile, portant l'accouplément à friction (b'), repose sur un chariot (3) qui est susceptible de se déplacer le long d'un chemin de guidage (4) s'étendant perpendiculairement par rapport à l'axe de rotation du disque de friction (b') de l'accouplément et de l'arbre d'entraînement (a') de la boîte de vitesses.

4.- Appareil selon la revendication 1 caractérisé en ce qu'il comporte un châssis récepteur (6) s'étendant parallèlement à l'axe longitudinal médian des parties à assembler et comportant deux longerons de guidage (7) placés à sa partie supérieure et disposés parallèlement à une certaine distance l'un de l'autre, longerons sur lesquels peut se déplacer longitudinalement, par l'intermédiaire de deux paliers de guidage (8) sur chaque longeron, un chariot d'avance (9), grâce à un moteur de positionnement (5) articulé d'une part à la paroi arrière (6'') du châssis récepteur (6) et d'autre part, à une pièce de poussée (10) faisant saillie vers le bas à partir du chariot d'avance.

5.- Appareil selon la revendication 1, caractérisé en ce qu'il comporte un chariot d'avance susceptible de pivoter autour d'un axe vertical perpendiculaire à l'axe longitudinal médian des parties à assembler et susceptible d'être décalé de façon correspondante à cet axe longitudinal médian.

6.- Appareil selon la revendication 2 ou 4, caractérisé en ce que le dispositif de maintien au bord frontal antérieur du chariot d'avance (9) présentant une forme extérieure rectangulaire, dispositif de maintien constitué de deux plaques réceptrices (11, 11'), est disposé verticalement perpendiculairement au plan de ce chariot et muni de trois goujons récepteurs (12), faisant saillie vers l'avant en étant chacun associé à un perçage traversant sur la bride (a'') de la boîte de vitesses ainsi que sur la bride (b'') du moteur, les parties d'extrémité libres de ces goujons étant respectivement coniques.

7.- Appareil selon la revendication 4 ou 6 caractérisé en ce que sur les grands côtés du chariot d'avance (9) se trouvent des parois porteuses (13) placées en face l'une de l'autre, et à l'extrémité antérieure desquelles est prévu un étrier d'appui (14) en forme de U dont l'âme médiane relie les deux parois porteuses, cette âme médiane (14') comportsnt une gorge concave (25), s'étendant longitudinalement, et destinée à servir d'appui à une tige de commutation (k) faisant saillie vers l'arrière à partir de la boîte de vitesses (a) du véhicule.

8.- Appareil selon la revendication 7, caractérisé en ce qu'à l'extrémité arrière du chariot d'avance (9), sur une paroi arrière (13') reliant les parois porteuses (13), est disposé un moteur d'entraînement (22) muni d'un train d'engrenages de démultiplication (22'), et dont l'arbre d'entraînement (22') porte l'accouplément d'entraînement (23) qui est constitué d'un moyeu de fixation (24) en forme de disque solidaire de l'arbre d'entraînement, et d'une douille cylindrique creuse (25) entourant avec un jeu radial la broche filetée (19), et qui comporte deux fentes longitudinales (26) diamètralement opposées s'étendant presque jusqu'au moyeu de fixation rapporté à l'extrémité arrière de la douille, fentes dans lesquelles vient en prise une broche transversale (30) prévue à l'extrémité de la broche filetée (19).

9.- Appareil selon la revendication 8, caractérisé en ce qu'à l'extrémité frontale, faisant face au moteur d'entraînement (22), de la broche filetée (19) est vissée une pièce réceptrice cylindrique creuse (27), munie du côté de la broche filetée d'un fond (27') dont se detache une saillie (28) s'étendant transversalement par rapport à l'axe de rotation de la pièce réceptrice, et qui vient en prise dans une rainure (19') conformée de façon correspondante et prévue à l'extrémité frontale de la broche filetée, le fût de la pièce réceptrice étant traversé par un perçage récepteur (27') s'étendant transversalement par rapport à l'axe de rotation de cette pièce, et dans lequel est introduite à force la broche transversale (30).

10.- Appareil selon la revendication 1, caractérisé en ce que le chariot d'avance (9) porte, entre l'étrier d'appui (14) en forme de U et le moteur d'entraînement (22), un support de retenue (17) destiné à recevoir l'écrou de guidage (18) en forme de douille à collerette et qui est un écrou à recirculation de billes.

11.- Appareil selon la revendication 1, caractérisé en ce que l'accouplément à friction (32) comporte un dispositif de réglage pour un couplé à transmettre à un moment donne.

12.- Appareil selon la revendication 1 ou 2, caractérisé en ce que le disque d'accouplément (34) susceptible d'être décalé axialement, comporte un disque à broches (35) placé à l'extérieur et jouant le rôle d'élément d'engrènement, et un disque porteur (36) placé à l'intérieur, s'étendant parallèlement à une certaine distance du disque à broches, et relié à celui-ci par l'intermédiaire d'un prolongement central (37), ce disque porteur comportant plusieurs perçages traversants (36') disposés à des intervalles angulaires égaux, et qui sont chacun traversés avec un jeu radial par un boulon d'écartement (33) monté sur l'accouplément à friction (32), ces boulons d'écartement comportsnt de leur côté à leur extrémité libre, une tête de vis (33'), une broche transversale, ou bien un organe analogue, coopérant avec la face frontale interne du disque porteur, les boulons d'écartement étant chacun entourés par un ressort de pression (38) s'appliquant, d'une part, sur la face frontale libre de l'accouplément à friction, et d'autre part sur le disque porteur.

13.- Appareil selon la revendication 12, caractérisé en ce que le disque à broches (35) du disque d'accouplément (34) susceptible d'être décalé axialement, comporte au moins trois broches d'entraînement (39) faisant saillie à partir de sa face frontale externe, et étant disposées à un même intervalle angulaire les unes des autres sur un même cercle de perçage, ces broches d'entraînement étant associées aux perçages traversants (c) sur la bride d'entraînement (a'), faisant saillie vers l,arrière de la boîte de vitesses (a) du véhicule, le nombre des broches d'entraînement étant égal ou bien double du nombre des perçages traversants sur la bride d'entraînement.

14.- Appareil selon la revendication 1, caractérisé en ce que, après introduction complète de l'arbre d'entraînement (a') de la boîte de vitesses dans le disque de friction (b') de l'accouplément, l'avance de la broche filetée (19) est interrompue par un contact de fin de course (40) disposé à poste fixe, puis la broche filetée est ensuite ramenée en tournant dans sa position de départ, dans laquelle, après la mise en placé de nouvelles parties à assembler au moyen de l'appareil (1), son mouvement est inversé par un contact de fin de course (41) disposé à poste fixe et elle est à nouveau déplacée vers l'avant.

15.- Appareil selon la revendication 14, caractérisé en ce que les contacts de fin de course (40, 41) sont des contacteurs de proximité.

FIG.7

FIG.8

0 077 489

FIG.9          FIG.10